# FASCICULE DE BREVET EUROPEEN

(11) **EP 0 847 124 B1**
(45) Date de publication et mention de la délivrance du brevet: **10.10.2001**
(21) Numéro de dépôt: 97402933.2
(22) Date de dépôt: 04.12.1997
(51) Int. Cl.: H02J 9/06

(54) **Alimentation de secours destinée à suppléer provisoirement à une carence d'une source d'alimentation principale**
Notstromversorgungseinrichtung zur provisorischen Stromversorgung im Falle eines Versagens der Hauptstromversorgung
Emergency power system for providing temporary power in case of failure of a principal power source

(30) Priorité: 05.12.1996 FR 9614934
(43) Date de publication de la demande: 10.06.1998
(73) Titulaire: ALCATEL, 75008 Paris (FR)
(72) Inventeur: Thérèze, Jean-Marie, 22300 Lannion (FR)
(74) Mandataire: Fournier, Michel Robert Marie

(56) Documents cités:
- EP-A- 0 315 830
- EP-A- 0 321 023
- EP-A- 0 501 418
- FR-A- 2 587 945
- GB-A- 2 262 003
- US-A- 4 779 037
- US-A- 5 277 363

## Description

Le domaine de l'invention est celui des systèmes d'alimentation. Plus précisément, la présente invention concerne une alimentation de secours, du type destinée à suppléer provisoirement à une carence d'une source d'alimentation principale. L'invention s'applique notamment aux convertisseurs DC/DC.

La figure 1 est un schéma synoptique d'un système d'alimentation de l'art connu, (voir EP-A-0 501 418).

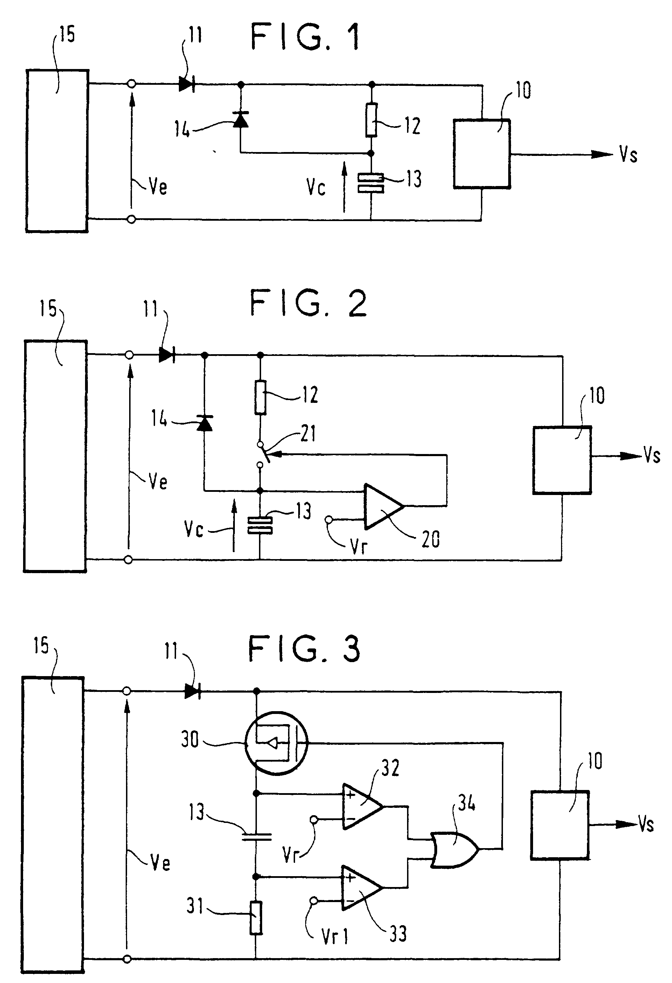

Le système d'alimentation de la figure 1 est destiné à assurer l'alimentation d'une charge 10, par exemple constituée par un convertisseur DC/DC fournissant une tension de sortie Vs à partir d'une tension d'entrée continue Ve. La tension Ve est générée par une source d'alimentation principale 15 et est susceptible d'évoluer entre une tension minimale d'entrée Ve1 et une tension maximale d'entrée Ve2. La tension Ve est appliquée à la charge 10 par l'intermédiaire d'une diode 11. En fonctionnement normal, la charge 10 est donc alimentée par la tension Ve.

Afin de pallier à une absence momentanée de la tension Ve, par exemple suite à une micro-coupure d'alimentation, il est prévu une alimentation de secours constituée par un condensateur 13 préalablement chargé à la tension Ve (en négligeant la chute de tension dans la diode 11) par l'intermédiaire d'une résistance 12 de limitation de courant. Lorsque la tension Ve devient inférieure à la tension stockée dans le condensateur 13, une diode 14, dont la cathode est reliée à la cathode de la diode 11, devient passante. La résistance présentée par cette diode 14 à l'état passant devient est alors très inférieure à la valeur de la résistance 12 et le condensateur 13 se décharge dans la charge 10 par l'intermédiaire de la diode 14. La diode 11 permet d'éviter que le condensateur 13 ne se décharge dans le générateur de la source d'alimentation principale 15.

Le problème posé par une alimentation de secours de ce type est que la tension nominale du condensateur 13 est choisie en fonction de la tension maximale Ve2 pouvant être atteinte par la tension d'entrée Ve. A titre d'exemple, si la tension Ve présente des fluctuations comprises entre 18 et 36 volts, le condensateur 13 est choisi pour supporter la tension nominale immédiatement supérieure à 36 volts, soit 50 volts. Or la charge 10 peut présenter un fonctionnement correct pour une tension d'alimentation inférieure à la tension Ve2, par exemple pour 15 volts. Ceci est typiquement le cas de convertisseurs DC/DC fonctionnant (c'est à dire fournissant une tension de sortie Vs régulée constante) pour une large plage de tension d'entrée, par exemple entre 15 et 36 volts. La tension de fonctionnement minimale (15 volts) est appelée valeur de seuil et notée Vmin. En cas de défaillance de la source d'alimentation principale, le condensateur 13 est chargé à une tension Vc égale à Ve avant la coupure d'alimentation et se décharge de manière continue dans la charge 10, jusqu'à ce que la tension fournie à cette charge 10 atteigne Vmin. La durée dt pendant laquelle le condensateur se décharge de Vc à Vmin (en négligeant la chute de tension dans la diode 14) est celle pendant laquelle une absence de la tension Ve est transparente pour la charge 10.

Cependant, cette durée dt n'est pas contrôlable et dans certaines applications est plus que suffisante. A titre d'exemple, lorsqu'un cahier des charges précise qu'une absence de la source d'alimentation principale Ve doit pouvoir être tolérée pendant 30 ms (typiquement une micro-coupure d'alimentation), il n'est pas nécessaire de prévoir une alimentation de secours permettant d'assurer un fonctionnement de la charge 10 pendant une durée supérieure car ceci entraîne un volume du condensateur de stockage d'énergie 13 plus important, ainsi qu'un surcoût.

Une autre solution connue (voir EP-A-0 321 023) consiste à utiliser un condensateur 13 de faible capacité et à le charger à une tension importante, par exemple à l'aide d'un montage Boost ou à l'aide d'un enroulement auxiliaire d'un transformateur Le produit C*V est dans ce cas important et permet d'obtenir un temps de maintien important.

Cependant, cette solution est coûteuse et la commutation est complexe lors du passage de la source d'alimentation principale à la source d'alimentation de secours.

La présente invention a notamment pour objectif de pallier ces inconvénients.

Plus précisément, un des objectifs de l'invention est de fournir une alimentation secours de dimensions et de coût réduit par rapport à l'état de la technique précité.

Un autre objectif de l'invention est de fournir une telle alimentation de secours dont la durée pendant laquelle elle est destinée à suppléer à l'absence de la source d'alimentation principale peut être aisément réglée.

Ces objectifs, ainsi que d'autres qui apparaîtront par la suite, sont atteints grâce à une alimentation de secours, du type destinée à suppléer provisoirement à une absence d'une tension d'entrée continue issue d'une source d'alimentation principale en fournissant à une charge une tension supérieure à une valeur de seuil, la source d'alimentation principale fournissant en fonctionnement normal à la charge la tension d'entrée continue, la tension d'entrée continue étant supérieure à la valeur de seuil et comprise entre une tension minimale d'entrée et une tension maximale d'entrée, l'alimentation de secours comprenant un condensateur dont la charge est assurée par la tension d'entrée continue, cette alimentation de secours comprenant des moyens de limitation de la charge du condensateur à une tension de référence inférieure à la tension maximale d'entrée.

Ainsi, le condensateur n'est plus chargé qu'à une tension suffisante pour suppléer à l'absence de la source d'alimentation principale pendant une durée prédéterminée, non dépendante de la tension Ve2. Il n'est dans ce cas pas nécessaire de sur-dimensionner ce condensateur au niveau de la tension qu'il doit pouvoir supporter (tension nominale) et il s'en suit un gain en termes d'encombrement et de coût.

Préférentiellement, les moyens de limitation de la charge du condensateur à une tension de référence inférieure à la tension maximale d'entrée comprennent des moyens formant interrupteur.

Avantageusement, la tension de référence est proportionnelle à la durée minimale pendant laquelle la charge doit être alimentée par une tension supérieure à la valeur de seuil, en cas d'absence de la tension d'entrée continue.

Dans une application préférentielle, la charge est constituée par un convertisseur DC/DC.

Dans un mode de réalisation préférentiel, les moyens de limitation de la charge du condensateur à une tension de référence inférieure à la tension maximale d'entrée comprennent un comparateur de la tension aux bornes du condensateur avec la tension de référence, ce comparateur pilotant des moyens permettant la charge du condensateur.

L'invention concerne également un système d'alimentation comportant une telle alimentation de secours.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 est un schéma synoptique d'un système d'alimentation de l'art connu ;
- la figure 2 est un schéma synoptique d'un système d'alimentation selon l'invention,
- la figure 3 est un schéma synoptique d'une variante de réalisation de la figure 2.

La figure 1 a été décrite précédemment en référence à l'état de la technique.

La figure 2 est un schéma synoptique d'un système d'alimentation selon l'invention. Les éléments identiques à ceux de la figure 1 portent les mêmes références numériques.

L'invention se distingue de l'état de la technique présenté en figure 1 en ce que la tension Vc aux bornes du condensateur 13, destiné à servir de source d'alimentation auxiliaire en cas de défaillance de la source d'alimentation principale 15, est en permanence comparée avec une tension de référence Vr, inférieure à la tension Ve2 et supérieure à la tension minimale Vmin pour laquelle la charge 10 présente un fonctionnement normal.

A titre d'exemple, en reprenant l'application numérique précédente, Vr = 20 volts, Ve1 = 18 volts, Ve2 = 36 volts et Vmin = 15 volts. La tension Vr est par exemple obtenue à l'aide d'une diode zéner. Un comparateur 20 est ici utilisé pour effectuer cette comparaison, ce comparateur 20 pilotant des moyens 21 permettant la charge du condensateur 13. Ces moyens 21 sont schématisés sous la forme d'un interrupteur et en pratique réalisés sous la forme d'un transistor. Lorsque la tension aux bornes du condensateur 13 est inférieure à la tension de référence Vr, le comparateur 20 commande la fermeture de l'interrupteur 21, de manière à charger le condensateur 13 par l'intermédiaire de la résistance 12. Lorsque la tension aux bornes du condensateur 13 atteint la tension Vr, le comparateur 20 commande l'ouverture de l'interrupteur 21, de manière à cesser la charge du condensateur 13.

On assure ainsi que la tension Vc aux bornes du condensateur 13 est égale à la tension Vr En pratique, on prévoira avantageusement un hystérésis au niveau du comparateur 20, de manière à éviter des commandes trop fréquentes de l'interrupteur 21. Lorsque la tension d'alimentation principale Ve devient inférieure à la tension Vr, le condensateur 13 assure une continuité d'alimentation de la charge 10 par l'intermédiaire de la diode 14.

La résistance 12, au lieu d'être reliée à la cathode de la diode 11 peut être reliée à l'anode de cette diode 11, afin de ne pas être pénalisé par la chute de tension dans la diode 11.

Avec les valeurs numériques précitées, le condensateur se déchargera à partir de 20 volts, sachant que la charge 10 présentera un fonctionnement normal jusqu'à ce que la tension qui lui est appliquée atteigne 15 volts. Ainsi, en négligeant la chute de tension dans la diode 14, le condensateur 13 assure une alimentation suffisante de la charge 10 pendant une durée dt correspondant à sa décharge de 20 à 15 volts. Cette durée dt peut être aisément réglée, en fonction du cahier des charges fixé, en agissant sur la tension de référence Vr. Plus la durée dt requise est importante, plus la tension Vr est importante. On ajuste donc la valeur de la tension de référence Vr en fonction de la durée minimale dt pendant laquelle la charge 10 doit être alimentée par une tension supérieure à sa valeur de seuil Vmin.

Dans une application préférentielle, la charge 10 est constituée par un convertisseur DC/DC fournissant une tension régulée de sortie Vs tant qu'une tension supérieure à Vmin est présente à son entrée.

On notera que l'invention permet de charger le condensateur 13 à un niveau de tension inférieur à la tension minimale d'entrée Ve1, par exemple à 17 volts. En pratique, la plage de charge du condensateur 13 est comprise entre Vmin et Ve2, mais, comme il a été décrit précédemment, le niveau de charge du condensateur 13 est volontairement inférieur à la tension Ve2 et proportionnel à la durée minimale dt pendant laquelle ce condensateur 13 doit pouvoir pallier à l'absence de la tension d'entrée Ve.

La figure 3 est un schéma synoptique d'une variante de réalisation de la figure 2.

Dans cette variante, un transistor MOSFET 30 est utilisé pour la charge du condensateur 13. Le drain du transistor 30 est relié au condensateur 13, l'autre borne du condensateur 13 étant reliée à une résistance 31 de faible valeur. Deux comparateurs 32, 33 sont ici utilisés pour la commande de la charge et de la décharge du condensateur 13 : un premier comparateur 32 compare la tension aux bornes du condensateur 13 avec la tension de référence Vr précitée et un second comparateur 33 compare une faible tension de référence Vr1 (par exemple 20 mV) avec la tension aux bornes de la résistance 31. Les sorties des comparateurs 32 et 33 sont reliées à une fonction OU 34 dont la sortie pilote le transistor 30. Le comparateur 32 a pour fonction de limiter la tension de charge du condensateur 13 à la tension de référence Vr alors que le comparateur 33 a pour fonction de limiter le courant de charge de ce condensateur 13 (charge à courant constant). Le transistor 30 comporte une diode en direct permettant de décharger le condensateur 13 en cas d'absence momentanée de la tension Ve ou lorsque le courant de charge devient trop important.

Dans cette variante de réalisation, la source du transistor 30 doit être reliée à la cathode de la diode 11. Il est à noter que le transistor MOSFET 30 peut être remplacé par un transistor bipolaire en parallèle duquel est placé une diode de décharge du condensateur 13.

Le fait de ne charger le condensateur 13 qu'à une tension limitée permet de réduire sa taille puisque la tension à ses bornes est indépendante de la tension maximale Ve2 pouvant être atteinte par Ve. Plus précisément, lorsque le temps de maintien dt requis est suffisamment inférieur à celui qui aurait été obtenu à l'aide d'un condensateur chargé à la tension Ve2, le concepteur de l'alimentation peut choisir une tension nominale de fonctionnement du condensateur plus faible (par exemple 25 volts au lieu de 50 volts). Le gain en encombrement est de l'ordre de deux et le coût est également fortement diminué.

## Revendications

1. Alimentation de secours, du type destinée à suppléer provisoirement à une absence d'une tension d'entrée continue (Ve) issue d'une source d'alimentation principale (15) en fournissant à une charge (10) une tension supérieure à une valeur de seuil (Vmin), ladite source d'alimentation principale (15) fournissant en fonctionnement normal à ladite charge (10) ladite tension d'entrée continue (Ve), ladite tension d'entrée continue (Ve) étant supérieure à ladite valeur de seuil (Vmin) et comprise entre une tension minimale d'entrée (Ve1) et une tension maximale d'entrée (Ve2), ladite alimentation de secours comprenant un condensateur (13) dont la charge est assurée par ladite tension d'entrée continue (Ve),
**caractérisée en ce qu'**elle comporte des moyens (20, 21) de limitation de la charge dudit condensateur (13) à une tension de référence (Vr) inférieure à ladite tension maximale d'entrée (Ve2).

2. Alimentation de secours selon la revendication 1, **caractérisée en ce que** lesdits moyens (20, 21) de limitation de la charge dudit condensateur (13) à une tension de référence (Vr) inférieure à ladite tension maximale d'entrée (Ve2) comprennent des moyens (21) formant interrupteur.

3. Alimentation de secours selon l'une des revendications 1 et 2, **caractérisée en ce que** ladite tension de référence (Vr) est proportionnelle à la durée minimale pendant laquelle ladite charge (10) doit être alimentée par une tension supérieure à ladite valeur de seuil (Vmin), en cas d'absence de ladite tension d'entrée continue (Ve).

4. Alimentation de secours selon l'une des revendications 1 à 3, **caractérisée en ce que** ladite charge (10) est constituée par un convertisseur DC/DC.

5. Alimentation de secours selon l'une des revendications 1 à 4, **caractérisée en ce que** lesdits moyens (20, 21) de limitation de la charge dudit condensateur (13) à une tension de référence (Vr) inférieure à ladite tension maximale d'entrée (Ve2) comprennent un comparateur (20) de la tension (Vc) aux bornes dudit condensateur (13) avec ladite tension de référence (Vr), ledit comparateur (20) pilotant des moyens (21) permettant la charge dudit condensateur (13).

6. Système d'alimentation, **caractérisé en ce qu'**il comporte une alimentation de secours selon l'une des revendications 1 à 5.

## Patentansprüche

1. Notstromversorgungsvorrichtung vom Typ zum provisorischen Ergänzen im Falle eines Ausbleibens einer von einer Hauptstromversorgung (15) kommenden Eingangsgleichspannung (Ve) durch Liefern einer Spannung oberhalb eines Schwellwerts (Vmin) an eine Last (10), wobei die Hauptstromversorgung (15) im Normalbetrieb an die Last (10) die Eingangsgleichspannung (Ve) liefert, wobei die Eingangsgleichspannung (Ve) größer als der Schwellwert (Vmin) ist und zwischen einer minimalen Eingangsgleichspannung (Ve1) und einer maximalen Eingangsgleichspannung (Ve2) liegt, wobei die Notstromversorgungsvorrichtung einen Kondensator (13) umfasst, dessen Ladung durch die Eingangsgleichspannung (Ve) gewährleistet ist, **dadurch gekennzeichnet, dass** sie Mittel (20, 21) zum Begrenzen der Ladung des Kondensators (13) auf eine Referenzspannung (Vr) unterhalb der maximalen Eingangsgleichspannung (Ve2) umfasst.

2. Notstromversorgungsvorrichtung nach Anspruch 1, **dadurch gekennzeichnet, dass** die Mittel (20, 21) zum Begrenzen der ladung des Kondensators (13) auf eine Referenzspannung (Vr) unterhalb der maximalen Eingangsgleichspannung (Ve2) einen Schutzschalter bildende Mittel (21) umfassen.

3. Notstromversorgungsvorrichtung nach Anspruch 1 oder 2, **dadurch gekennzeichnet, dass** die Referenzspannung (Vr) proportional zur minimalen Dauer ist, während der die Last (10) von einer Spannung oberhalb des Schwellwerts (Vmin) im Falle eines Ausbleibens der Eingangsgleichspannung (Ve) versorgt werden soll.

4. Notstromversorgungsvorrichtung nach einem der Ansprüche 1 bis 3, **dadurch gekennzeichnet, dass** die Last (10) durch einen DC/DC-Wandler gebildet ist.

5. Notstromversorgungsvorrichtung nach einem der Ansprüche 1 bis 4, **dadurch gekennzeichnet, dass** die Mittel (20, 21) zum Begrenzen der Ladung des Kondensators (13) auf eine Referenzspannung (Vr) unterhalb der maximalen Eingangsgleichspannung (Ve2) einen Komparator (20) zum Vergleichen der Spannung (Vc) an den Klemmen des Kondensators (13) mit der Referenzspannung (Vr) umfassen, wobei der Komparator (20) Mittel (21) steuert, die das Laden des Kondensators (13) erlauben.

6. Stromversorgungssystem, **dadurch gekennzeichnet, dass** es eine Notstromversorgungsvorrichtung nach einem der Ansprüche 1 bis 5 umfasst.

## Claims

1. A back-up power supply of the type serving to compensate temporarily for an absence of a DC input voltage (Ve) from a main power supply (15) by delivering a voltage that is higher than a threshold value (Vmin) to a load (10), said main power supply (15) delivering said DC input voltage (Ve) to said load (10) under normal operating conditions, said DC input voltage (Ve) being higher than said threshold value (Vmin), and lying in the range defined by a minimum input voltage (Ve1) and by a maximum input voltage (Ve2), said back-up power supply including a capacitor (13) charged by said DC input voltage (Ve), said back-up power supply being **characterized in that** it includes means (20, 21) for limiting the charge on said capacitor (13) to a reference voltage (Vr) that is lower than said maximum input voltage (Ve2).

2. A back-up power supply according to claim 1, **characterized in that** said means (20, 21) for limiting the charge on said capacitor (13) to a reference voltage (Vr) lower than said maximum input voltage (Ve2) comprise switchforming means (21).

3. A back-up power supply according to claim 1 or 2, **characterized in that** said reference voltage (Vr) is proportional to the minimum duration for which said load (10) must be powered by a voltage higher than said threshold value (Vmin) in the event of absence of said DC input voltage (Ve).

4. A back-up power supply according to any one of claims 1 to 3, **characterized in that** said load (10) is constituted by a DC-to-DC converter.

5. A back-up power supply according to any one of claims 1 to 4, **characterized in that** said means (20, 21) for limiting the charge on said capacitor (13) to a reference voltage (Vr) lower than said maximum input voltage (Ve2) comprise a comparator (20) for comparing the voltage (Vc) across the terminals of said capacitor (13) with said reference voltage (Vr), said comparator (20) driving means (21) enabling said capacitor (13) to be charged.

6. A power supply system, **characterized in that** it includes a back-up power supply according to any one of claims 1 to 5.
